# EUROPÄISCHE PATENTSCHRIFT

(11) **EP 0 495 142 B1**
(45) Veröffentlichungstag und Bekanntmachung des Hinweises auf die Patenterteilung: **12.10.1994**
(21) Anmeldenummer: 91100469.5
(22) Anmeldetag: 16.01.1991
(51) Int. Cl.: H02H 11/00, H02H 3/20

(54) **Verpolungs- und Überspannungsschutz für Schaltungsanordnungen**
Protection against inverted polarity and overvoltage for circuit arrangements
Protection contre l'inversion de polarité et contre les surtensions pour des circuits

(43) Veröffentlichungstag der Anmeldung: 22.07.1992
(73) Patentinhaber: SIEMENS AKTIENGESELLSCHAFT, 80333 München (DE)
(72) Erfinder: Wetzel, Klaus, W-8000 München 83 (DE)

(56) Entgegenhaltungen:
- DE-A- 3 535 788
- DE-A- 3 835 662
- DE-C- 3 425 235
- US-A- 3 571 608

## Beschreibung

Die Erfindung betrifft einen Verpolungs- und Überspannungsschutz gemäß dem Oberbegriff des Anspruchs 1.

Durch Verpolung der Versorgungsspannung bzw. durch Überspannungsspitzen können mit der Versorgungsspannung verbundene Funktionseinheiten, insbesondere darin enthaltene integrierte Schaltungen, beschädigt oder sogar zerstört werden. Zum Schutz derartiger Funktionseinheiten dienen Schaltungsanordnungen zum Verpolungs- und Überspannungsschutz. Derartige Schaltungsanordnungen werden vor allem in der Automobilelektronik eingesetzt und sind z. B. aus der DE 35 35 788 A1 bekannt. FIG 1 zeigt einen derartigen Verpolungsschutz. Die DE-A- 3 835 662 offenbart einen Verpolungs- und Überspannungsschutz nach dem Oberbegriff des Anspruchs 1.

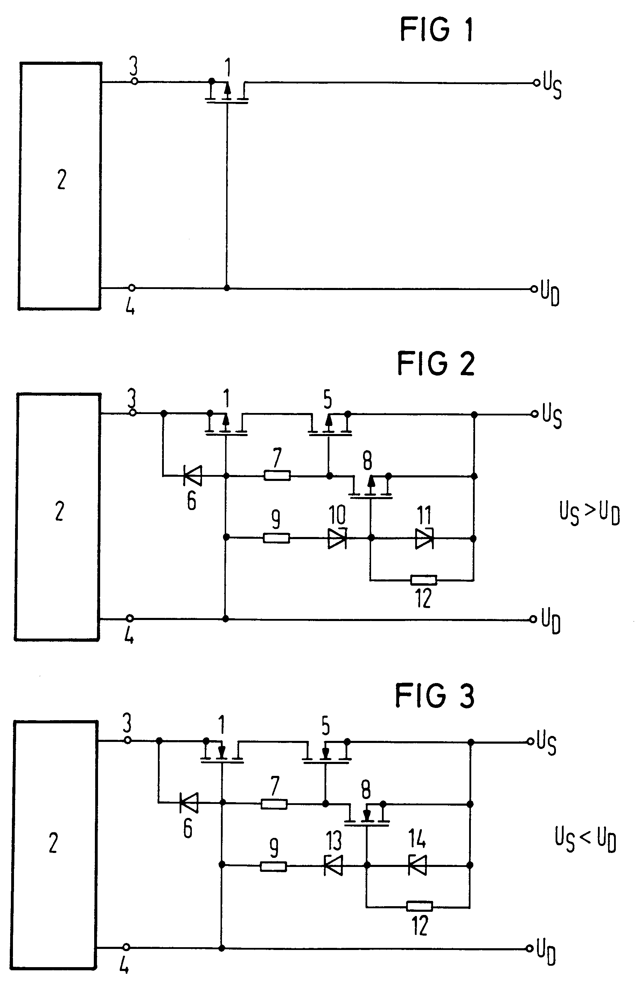

Der Verpolungsschutz nach FIG 1 besteht aus einem p-Kanal-MOSFET 1, dessen Drain-Source-Strecke in die Versorgungsleitung zwischen dem Versorgungsspannungsanschluß U_{S} der Spannungsquelle und der Schaltung 2 mit entsprechender Last geschaltet ist. Das Gate des MOSFETs 1 ist an das Bezugspotential U_{D} der Spannungsquelle angeschlossen.

Die Wirkungsweise des Verpolungsschutzes beruht darauf, daß ein MOSFET - im Gegensatz zu bipolaren Transistoren - wie ein niederohmiger Widerstand wirkt, der in beiden Richtungen Strom Zuläßt. Leitend ist der MOSFET , wenn sein Gate negatives Potential gegenüber der Source erhält. Durch die Schutzanordnung gemäß FIG 1 läßt sich die Verlustleistung daher gering halten.

Wird die Versorgungsspannung U_{S}-U_{D} versehentlich verpolt, so ist das Gate nicht negativ gegenüber dem Source und der Transistor 1 ist gesperrt.

In Kraftfahrzeugen kommt es häufig vor, daß negative oder positive Überspannungen über die Versorgungsspannungszuleitungen integrierte Schaltungen zerstören. Die gemäß FIG 1 gezeigte Schutzschaltung zum Schutz vor Verpolung kann aber keinen Schutz vor Überspannungen gewährleisten.

Aufgabe der Erfindung ist es daher, die erwähnte Schaltung so weiterzubilden, daß die zu schützende Schaltung sowohl gegen Verpolung als auch vor Überspannung geschützt wird.

Diese Aufgabe wird durch den kennzeichnenden Teil des Anspruchs 1 gelöst. Weiterbildungen sind Gegenstand der Unteransprüche.

Vorteil der Erfindung ist, daß die Überspannungsenergie nicht in Verluste umgewandelt wird. Ein zweiter MOSFET, dessen Laststrecke in Reihe zum ersten MOSFET geschaltet ist, wird in den sperrenden Zustand geschaltet, wenn eine Überspannung auftritt. Auf diese Weise werden Überspannungsspitzen sicher von der zu schützenden Schaltung ferngehalten.

Ein weiterer Vorteil ist, daß der Schwellwert zum Sperren des zweiten Transistors einstellbar ist, so daß erst ab einer vordefinierbaren Höhe der Überspannung die Versorgungsspannungszuleitung unterbrochen wird.

Die Erfindung wird nachfolgend anhand von drei Figuren näher erläutert. Die Figuren zeigen:
- FIG 1: ein Verpolungsschutz gemäß dem Stand der Technik,
- FIG 2: ein erstes Ausführungsbeispiel der erfindungsgemäßen Schutzanordnung,
- FIG 3: ein zweites Beispiel der erfindungsgemäßen Schutzanordnung,

Der in FIG 2 dargestellte Verpolungs- und Überspannungsschutz zeigt die zu schützende Schaltungsanordnung 2 mit Anschlußklemmen 3 und 4, welche an die Schutzschaltung angeschlossen sind. Die Anschlußklemme 4 ist mit dem Bezugspotentialanschluß U_{D} verbunden. Der Anschlußklemme 3 wird die Ausgangsspannung der Schutzschaltung zugeführt. Zwei MOSFETs 1 und 5 vom p-Kanaltyp sind vorgesehen. Die Laststrecken der beiden MOSFETs 1, 5 sind derart in Reihe geschaltet, daß der Drain-Anschluß des ersten MOSFETs 1 mit dem Drain-Anschluß des zweiten MOSFETs 5 verbunden ist. Der Sourceanschluß des ersten MOSFETs 1 ist mit der Anschlußklemme 3 verschaltet. Der Sourceanschluß des zweiten MOSFETs ist mit der Versorgungsspannungsklemme U_{S} verbunden. Der Gateanschluß des ersten MOSFETs 1 ist über einen Widerstand 7 mit dem Gateanschluß des zweiten MOSFETs 5 verschaltet. Weiterhin ist der Gateanschluß des ersten MOSFETs 1 mit der Anschlußklemme 4 verbunden, welche wiederum mit dem Bezugspotentialanschluß U_{D} verbunden ist. Eine Diode 6 ist vorgesehen, deren Anode mit dem Gate des ersten MOSFETs und deren Katode mit dem Sourceanschluß des ersten MOSFETs 1 verschaltet ist. Weiterhin enthält die Schaltungsanordnung einen dritten MOSFET 8, dessen Sourceanschluß mit dem Gate und dessen Drainanschluß mit dem Sourceanschluß des zweiten MOSFETs 5 verbunden ist. Der Gateanschluß des dritten MOSFETs 8 ist über eine Reihenschaltung bestehend aus einer Zenerdiode 10 und einem Widerstand 9 an das Bezugspotential U_{D} angeschlossen. Zwischen dem Gateanschluß und dem Sourceanschluß des dritten MOSFETs 8 liegt die Parallelschaltung einer zweiten Zenerdiode 11 und eines dritten Widerstands 12.

Im Normalbetrieb, d. h. bei einer Betriebsspannung U_{S} > U_{D}, sind die beiden MOSFETs 1 und 5 im leitenden Zustand, da am Gateanschluß der beiden MOSFETs 1 und 5 gegenüber ihren Sourceanschlüssen ein negatives Potential anliegt. Der dritte MOSFET 8 ist gesperrt, da die Zenerdiode 10 im Normalbetrieb stromlos ist.

Bei Überspannung ist die Zenerdiode 10 stromführend. Dadurch geht der dritte MOSFET 8 in den leitenden Zustand über und das Gate des zweiten MOSFETs 5 wird mit seinem Sourceanschluß kurzgeschlossen. Auf diese Weise sperrt der MOSFET 5 und somit werden Überspannungen vom Verbraucher 2 ferngehalten.

Die Zenerdiode 11 begrenzt die am MOSFET 8 anliegende zulässige Gatespannung und die Widerstände 9 und 12 begrenzen bei Falschpolung den Zenerdiodenstrom. Die Diode 6 dient zum Ableiten der Überspannung am Gate des MOSFETs 1, die bei bestimmten induktiven Verbrauchern 2 und bei Netzunterbrechung auftreten können.

Bei Anliegen einer negativen Spannung an der Versorgungsspannungsklemme U_{S}, also bei Falschpolung, sperren beide MOSFETs 1 und 5.

Soll die Reihenschaltung der Laststrecken der beiden MOSFETs 1 und 5 in der negativen Spannungszuleitung liegen, z. B. wenn U_{S} < U_{D} ist, so bietet sich eine Schaltung gemäß FIG 3 an.

Diese Schaltung ist identisch mit der in FIG 2 gezeigten bis auf den Unterschied, daß alle drei MOSFETs 1, 2, 8 vom n-Kanal-Typ sind. Gleiche Elemente sind jeweils mit gleichem Bezugszeichen versehen. Die Zenerdioden 10, 11 aus FIG 2 sind hier mit 13 und 14 bezeichnet. Sie sind hier derart geschaltet, daß die Anode der ersten Zenerdiode 13 mit dem Gate des dritten MOSFETs 8 und ihre Katode mit dem Widerstand 9 verbunden ist. Die Anode der zweiten Zenerdiode 14 ist hier mit dem Sourceanschluß des dritten MOSFETs 8 und ihre Katode mit dem Gateanschluß des dritten MOSFETs 8 verschaltet. Beide Dioden 13 und 14 sind also gegenüber der in FIG 2 gezeigten Schaltung entgegengesetzt gepolt. Die übrigen Bauelemente entsprechen denen in FIG 2 gezeigten.

Die Funktionsweise entspricht der in FIG 2 beschriebenen Funktionsweise.

Die Schaltung eignet sich zum Aufbau mit diskreten Bauteilen wie auch als integrierte Schaltung für Schutzelemente. Sie eignet sich zum Schützen von jedweden elektrischen oder elektronischen Geräten bzw. Funktionseinheiten gegen Falschpolung sowie negativen oder positiven Überspannungen.

## Patentansprüche

1. Verpolungs- und Überspannungsschutz für eine Last (2) mit einem ersten MOSFET (1), dessen Drain-Sourcestrecke in die Versorgungsspannungszuleitung zwischen einem Versorgungsspannungsanschluß (U_{S}) einer Spannungsquelle und der Last (2) angeschaltet ist und dessen Gate mit einem Bezugspotentialanschluß (U_{D}) verbunden ist, und einem
zweiten MOSFET (5), dessen Drain-Source-Strecke derart mit der des ersten MOSFETs in Reihe geschaltet ist, daß die Drainanschlüsse des ersten und zweiten MOSFET (1, 5) miteinander verbunden sind,
**dadurch gekennzeichnet**, daß
- das Gate des zweiten MOSFETs (5) über einen Widerstand (7) mit dem Gate des ersten MOSFETs (1) verbunden ist,
- ein dritter MOSFET (8) vorgesehen ist, dessen Drain an das Gate des zweiten MOSFETs (5) geschaltet ist, und dessen Source an den Versorgungsspannungsanschluß (U_{S}) geschaltet ist,
- zwischen Bezugspotentialanschluß (U_{D}) und Gate des dritten MOSFETs (8) eine Reihenschaltung aus einem ersten Widerstand (9) und einer Zenerdiode (10) geschaltet ist,
- das Gate des dritten MOSFETs (8) über einen zweiten Widerstand (12) mit dem Versorgungsspannungsanschluß (U_{S}) verbunden ist.

2. Verpolungs- und Überspannungsschutz für Schaltungsanordnungen (2) gemäß Anspruch 1,
**dadurch gekennzeichnet**, daß
das Gate des ersten MOSFETs (1) mit der Anode einer Diode (6) und deren Katode mit dem Versorgungsspannungsanschluß (3) der Last verbunden ist.

3. Verpolungs- und Überspannungsschutz für Schaltungsanordnungen (2) gemäß Anspruch 1 oder 2,
**dadurch gekennzeichnet**, daß
das Gate des dritten MOSFETs mit der Anode einer zweiten Zenerdiode (11) und deren Katode mit dem Sourceanschluß des dritten MOSFETs (8) verbunden ist.

## Claims

1. Polarity-reversal and overvoltage protection for a load (2) having a first MOSFET (1) whose drain-source path is connected in the supply voltage lead between a supply voltage terminal (U_{S}) of a voltage source and the load (2) and whose gate is connected to a reference potential terminal (U_{D}), and a second MOSFET (5) whose drain-source path is connected in series with that of the first MOSFET in such a way that the drain terminals of the first and second MOSFET (1, 5) are interconnected, characterized in that
- the gate of the second MOSFET (5) is connected to the gate of the first MOSFET (1) via a resistor (7),
- a third MOSFET (8) is provided whose drain is connected to the gate of the second MOSFET (5) and whose source is connected to the supply voltage terminal (U_{S}),
- a series connection comprising a first resistor (9) and a zener diode (10) is connected between reference potential terminal (U_{D}) and gate of the third MOSFET (8),
- the gate of the third MOSFET (8) is connected to the supply voltage terminal (U_{S}) via a second resistor (12).

2. Polarity-reversal and overvoltage protection for circuit arrangements (2) according to Claim 1, characterized in that the gate of the first MOSFET (1) is connected to the anode of a diode (6) and the cathode of the latter is connected to the supply voltage terminal (3) of the load.

3. Polarity-reversal and overvoltage protection for circuit arrangements (2) according to Claim 1 or 2, characterized in that the gate of the third MOSFET is connected to the anode of a second zener diode (11) and the cathode of the latter is connected to the source terminal of the third MOSFET (8).

## Revendications

1. Système de protection contre l'inversion de polarité et la surtension pour une charge (2), comportant un premier transistor MOSFET (1), dont la voie drain-source est branchée dans la ligne de tension d'alimentation entre une borne de tension d'alimentation (U_{S}) d'une source de tension et la charge (2) et dont la grille est reliée à une borne (U_{D}) du potentiel de référence, et un second transistor MOSFET (5), dont la voie drain-source est branchée en série avec celle du premier transistor MOSFET de telle sorte que les bornes de drain des premier et second transistors MOSFET (1, 5) sont reliées entre elles,
caractérisé par le fait que
- la grille du second transistor MOSFET (5) est reliée par l'intermédiaire d'une résistance (7) à la grille du premier transistor MOSFET (1),
- il est prévu un troisième transistor MOSFET (8), dont le drain est connecté à la grille du second transistor MOSFET (5) et dont la source est connectée à la borne de tension d'alimentation (U_{S}),
- un montage série formé d'une première résistance (9) et d'une diode Zener (10) est branché entre la borne de potentiel de référence (U_{D}) et la grille du troisième transistor MOSFET (8),
- la grille du troisième transistor MOSFET (8) est reliée, par l'intermédiaire d'une seconde résistance (12), à la borne de tension d'alimentation (U_{S}).

2. Système de protection contre l'inversion de polarité et la surtension pour des montages (2) suivant la revendication 1,
caractérisé par le fait que la porte du premier transistor MOSFET (1) est reliée à l'anode d'une diode (6) et que la cathode de cette dernière est reliée à la borne de tension d'alimentation (3) de la charge.

3. Système de protection contre l'inversion de polarité et la surtension pour des montages (2) suivant la revendication 1 ou 2,
caractérisé par le fait que la grille du troisième transistor MOSFET est reliée à l'anode d'une seconde diode Zener (11) et que la cathode de cette diode est reliée à la borne de source du troisième transistor MOSFET (8).
